# EUROPÄISCHE PATENTSCHRIFT

(11) **EP 2 707 604 B1**
(45) Veröffentlichungstag und Bekanntmachung des Hinweises auf die Patenterteilung: **01.03.2017**
(21) Anmeldenummer: 12727266.4
(22) Anmeldetag: 11.05.2012
(51) Int. Cl.: F15B 21/04, B60T 11/30, F15B 21/00

(54) **ENTLÜFTUNGSVORRICHTUNG FÜR HYDRAULISCHE SCHLEIFEN**
VENTILATION DEVICE FOR HYDRAULIC LOOPS
DISPOSITIF DE PURGE D'AIR POUR BOUCLES HYDRAULIQUES

(30) Priorität: 13.05.2011 CN 201110128720
(43) Veröffentlichungstag der Anmeldung: 19.03.2014
(73) Patentinhaber: Schaeffler Technologies AG & Co. KG, 91074 Herzogenaurach (DE)
(72) Erfinder: HUANG, Chao, Shanghai (CN)
(86) Internationale Anmeldenummer: PCT/DE2012/000483
(87) Internationale Veröffentlichungsnummer: WO 2012/155883

(56) Entgegenhaltungen:
- DE-A1- 10 155 793
- DE-A1-102009 020 670

## Beschreibung

### Gebiet der Erfindung

Die vorliegende Anmeldung bezieht sich auf Hydraulikkupplungs-Ausrücksysteme für Kraftfahrzeuge, insbesondere auf einen Entlüftungsstutzen zur Flüssigkeitsfüllung und Entlüftung in einem Hydraulikkupplungs-Ausrücksystem eines Kraftfahrzeuges.

### Technischer Hintergrund

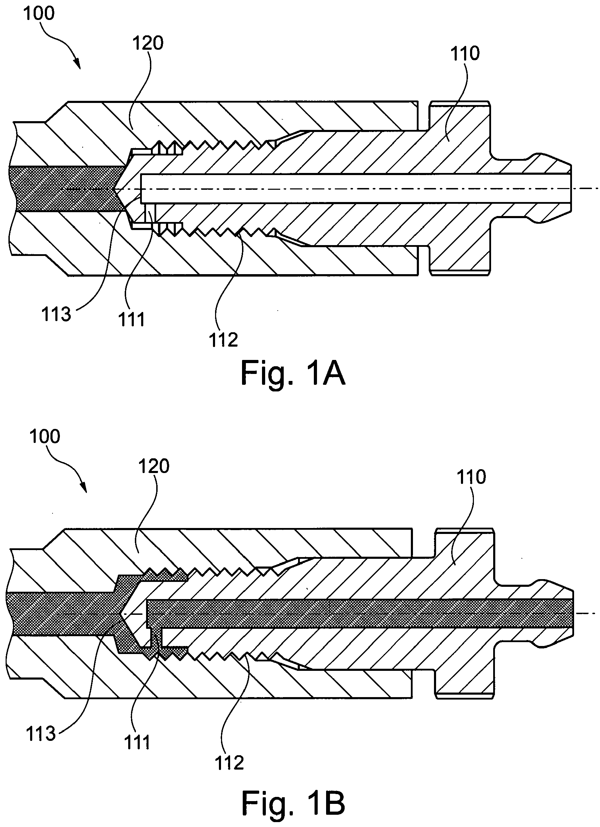

Bei den bekannten Hydraulikkupplungs-Ausrücksystemen von Kraftfahrzeugen erfolgt die Entlüftung bzw. Fluidabführung in der Regel durch zwei Entlüftungsstutzentypen, und zwar Entlüftungsstutzen mit Gewinde und drehbare Entlüftungsstutzen. Wie aus Fig. 1A-1B zu ersehen ist, besteht ein Entlüftungsstutzen mit Gewinde 100 lediglich aus einem Entlüftungsventil 110 und einem Stutzengehäuse 120, welche über ein angeformtes Gewinde 112 miteinander fest verbunden sind. So kann auch dann eine Nebendichtung gewährleistet werden, wenn die Gewindepassung gelöst und somit die Bohrung 111 im Entlüftungsventil 110 geöffnet wird, um mögliche Leckagen zwischen Stutzengehäuse 120 und Entlüftungsventil 110 zu vermeiden. An dem Entlüftungsventil 110 und Stutzengehäuse 120 ist ferner eine Schrägfläche 113 vorgesehen, die als primäres Dichtmittel dazu beiträgt, bei engem Gewindeeingriff und verschlossener Bohrung 111 eine Liniendichtung zu bilden.

Entlüftungsstutzen mit Gewinde besitzen zwar einen einfachen Aufbau, erlauben jedoch wegen der engen Gewindepassung bei der Montage und Reparatur nur schwer eine Gas/Fluidabführung. Da der Motorraum meist klein ist, lassen sich derartige Stutzen kaum von Hand betätigen, insbesondere bei kleineren Kraftfahrzeugen. Zum Lösen bzw. Herstellen der Gewindeverbindung sind oft Spezialwerkzeuge wie beispielsweise Schlüssel notwendig.

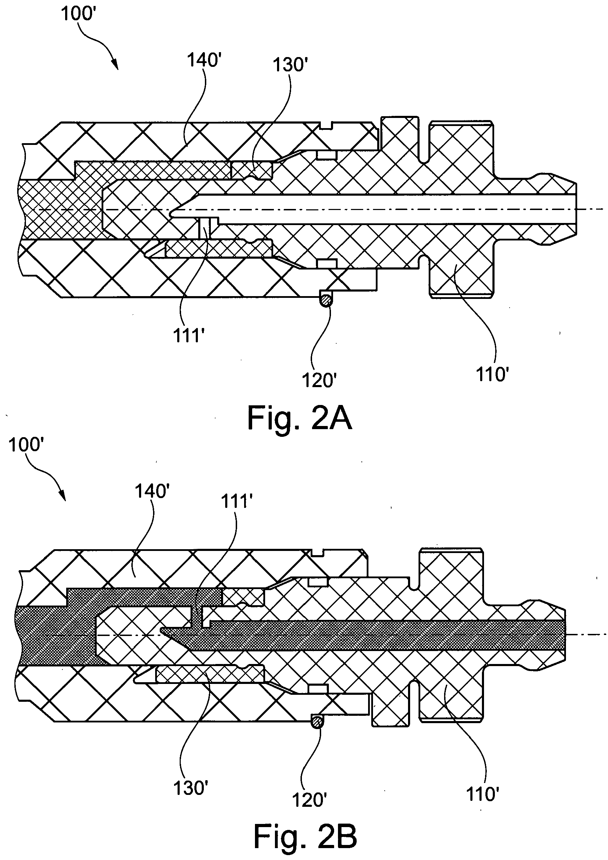

Um die genannten Probleme zu bewältigen, wurden drehbare Entlüftungsstutzen entwickelt, die auf einfache Weise durch eine Drehbewegung von 180° eine Entlüftung oder Fluidabführung ermöglichen. Wie in Fig. 2A-2B dargestellt ist, besteht ein drehbarer Entlüftungsstutzen 100' aus einem Entlüftungsventil 110', einer Federklemme 120', einem Stutzengehäuse 140' und einem Dichtungsschlauch 130'. Dabei ist das Entlüftungsventil 110' durch die Federklemme 120' relativ zum Stutzengehäuse 140' drehbeweglich in diesem eingeklemmt. Der Dichtungsschlauch 130', der abgeschrägt ausgeführt ist, befindet sich am Entlüftungsventil 110' und dient wie ein Entlüftungsstutzen mit Gewinde sowohl der Hauptdichtung als auch der Nebendichtung. Insbesondere kann die Bohrung 111' im Entlüftungsventil 110' beim Transport durch den Dichtungsschlauch 130' verschlossen (Nebendichtung) und durch eine 180° Drehung des Entlüftungsventils wieder geöffnet werden, um ein Gas/Fluid auszulassen. Die DE 101 55 793 A1 offenbart einen Entlüftungsstutzen zur Flüssigkeitsfüllung und Entlüftung in einem Hydraulikkupplungs-Ausrücksystem eines Kraftfahrzeugs gemäß den Merkmalen des Oberbegriffes des Patentanspruchs 1.

Drehbare Entlüftungsstutzen sind vorteilhafterweise leicht von Hand zu betätigen. Nachteilig ist jedoch, dass sich durch den Dichtungsschlauch eine sogenannte Flächendichtung ausbildet. Dies kann zur Schiefstellung des Entlüftungsventils gegenüber dem Stutzengehäuse führen, wenn die beiden Bohrungen im Stutzengehäuse (die kleinere Bohrung dient zur Aufnahme des Dichtungsschlauches und die größere zur Aufnahme des Entlüftungsventils) eine schlechte Rundheit und/oder einen schlechten Rundlauf besitzen, insbesondere bei starken Temperaturänderungen (Betriebstemperatur liegt im Bereich von 150°C bis - 40°C). Als Folge davon sind Leckstellen zwischen Entlüftungsventil und Stutzengehäuse zu erwarten.

Insoweit ist es wünschenswert, Entlüftungsstutzen dahingehend weiterzubilden, dass sie bedienerfreundlicher und langlebiger sind.

### Offenbarung der Erfindung

Der vorliegenden Erfindung liegt daher die Aufgabe zugrunde, einen neuartigen drehbaren Entlüftungsstutzen anzugeben, mit dem die oben erwähnten Probleme des Stands der Technik überwunden werden können.

Zur Lösung der gestellten Aufgabe wird erfindungsgemäß ein Entlüftungsstutzen vorgeschlagen, der sich zum Einsatz bei Hydraulikkupplungs-Ausrücksystemen von Kraftfahrzeugen eignet und dazu ein Entlüftungsventil und ein Stutzengehäuse umfasst. Das Entlüftungsventil ist relativ zum Stutzengehäuse drehbeweglich in diesem angeordnet. Zwischen Entlüftungsventil und Stutzengehäuse ist ein primäres Dichtmittel angebracht. Am Außenumfang des Entlüftungsventils befindet sich eine Bohrung, die durch das primäre Dichtmittel verschließbar und durch eine 180° Drehung des Entlüftungsventils wieder geöffnet werden kann, um die Funktion der Entlüftung zu erfüllen. Darüber hinaus verfügt der Stutzen über ein sekundäres Dichtmittel, das sich zwischen Entlüftungsventil und Stutzengehäuse befindet und in der Entlüftungsrichtung hinter der Bohrung angeordnet ist. Dadurch werden die Schieflage des Entlüftungsventils gegenüber dem Stutzengehäuse und auch die Gefahr einer damit verbundenen Leckage verringert.

Der vorliegenden Erfindung gemäß umfasst das Entlüftungsventil einen Abschnitt größeren Durchschnitts und einen Abschnitt kleineren Durchschnitts, wobei das primäre Dichtmittel im Abschnitt kleineren Durchschnitts und das sekundäre Dichtmittel im Abschnitt größeren Durchschnitts angebracht ist.

Zudem ist jeweils am Außenumfang des Stutzengehäuses eine im Zickzack verlaufende Aussparung und am Außenumfang des Entlüftungsventils ein Vorsprung ausgebildet. Dann kann der Vorsprung entlang der Aussparung geführt werden, um das Entlüftungsventil zu drehen. Durch die Drehbewegung des Entlüftungsventils wird das primäre Dichtmittel aus seiner Gebrauchsstellung gebracht und so die Bohrung geöffnet. Auf diese Weise erfüllen das primäre und sekundäre Dichtmittel, bei denen es sich jeweils um einen O-Ring handelt, jeweils die Funktion der Haupt- und Nebendichtung und bilden dabei zwei Liniendichtungen, die theoretisch eine Linie definieren. Damit können die durch Temperaturwechsel bedingten Toleranzänderungen durch eine Verformung der O-Ringe ausgeglichen werden, so dass das Entlüftungsventil einen besseren Rundlauf im Stutzengehäuse besitzt als herkömmliche drehbare Entlüftungsstutzen. Auch dadurch werden die Schieflage des Entlüftungsventils gegenüber dem Stutzengehäuse und auch die Gefahr einer damit verbundenen Leckage verringert. Des Weiteren lässt sich die Bohrung manuell öffnen und verschließen, indem das Entlüftungsventil entlang der im Zickzack verlaufenden Aussparung gedreht wird.

Durch die Ausbildung einer Liniendichtung im drehbaren Entlüftungsstutzen, die sich als robuster erweist, kann die Abhängigkeit von den durch Temperaturwechsel verursachten Toleranzänderungen gegenüber der Flächendichtung der bekannten drehbaren Entlüftungsstutzen, die aus den Dichtflächen des Dichtungsschlauches, des Stutzengehäuses und des Entlüftungsstutzens besteht und empfindlicher gegen die durch Temperaturwechsel verursachten Toleranzänderungen ist, reduziert werden. Bei den bekannten drehbaren Entlüftungsstutzen treten deshalb oft dann Leckagen auf, wenn die beiden im Stutzengehäuse vorgesehenen Bohrungen einen schlecht tolerierten Innendurchmesser, insbesondere bei Temperaturschwankungen eine schlecht tolerierte Rundheit und einen schlecht tolerierten Rundlauf besitzen. Zudem sind O-Ringe als Normteile langlebiger und kostengünstiger als Dichtungsschläuche.

In einem weiteren nicht erfindungsgemäßen Ausführungsbeispiel wird als sekundäres Dichtmittel ein O-Ring und als primäres Dichtmittel ein Dichtungsschlauch verwendet. Zusätzlich hierzu ist der Dichtungsschlauch abgeschrägt ausgeführt, um die Bohrung durch eine Drehbewegung des Entlüftungsventils öffnen zu können. Dabei können die durch Temperaturwechsel bedingten Toleranzänderungen durch eine Verformung der O-Ringe ausgeglichen werden, so dass das Entlüftungsventil einen besseren Rundlauf im Stutzengehäuse besitzt als herkömmliche drehbare Entlüftungsstutzen. Dadurch kann mit dem sekundären Dichtmittel auch ermöglicht werden, dass die wegen unzureichender Genauigkeit oder der oben genannten Toleranzänderungen entstehende Schieflage des Entlüftungsventils reduziert wird.

Darüber hinaus kann das Entlüftungsventil durch eine Federklemme oder anderweitige Klemmen im Stutzengehäuse eingeklemmt sein.

Gemäß einem Ausführungsbeispiel der Erfindung sind das primäre und sekundäre Dichtmittel in einem Abstand zueinander angeordnet. Je größer dieser Abstand ist, umso weniger ist das Entlüftungsventil geneigt.

### Beschreibung der Figuren

Zur Verdeutlichung der Merkmale und Vorteile der vorliegenden Erfindung wird diese nachfolgend anhand von Ausführungsbeispielen unter Bezugnahme auf die anliegenden Zeichnungen näher erläutert. Dabei zeigen
Fig. 1A-1B jeweils in Schnittdarstellung den Aufbau eines aus dem Stand der Technik bekannten Entlüftungsstutzens mit Gewinde,
Fig. 2A-2B jeweils in Schnittdarstellung den Aufbau eines aus dem Stand der Technik bekannten drehbaren Entlüftungsstutzens,
Fig. 3A-3B jeweils in perspektivischer und Schnittdarstellung einen drehbaren Entlüftungsstutzen gemäß einem Ausführungsbeispiel der Erfindung in einer geschlossenen Stellung,
Fig. 4A-4B jeweils in perspektivischer und Schnittdarstellung einen drehbaren Entlüftungsstutzen gemäß einem Ausführungsbeispiel der Erfindung in einer geöffneten Stellung und
Fig. 5 in Schnittdarstellung einen drehbaren Entlüftungsstutzen gemäß einem weiteren nicht erfindungsgemäßen Ausführungsbeispiel in einer geschlossenen Stellung.

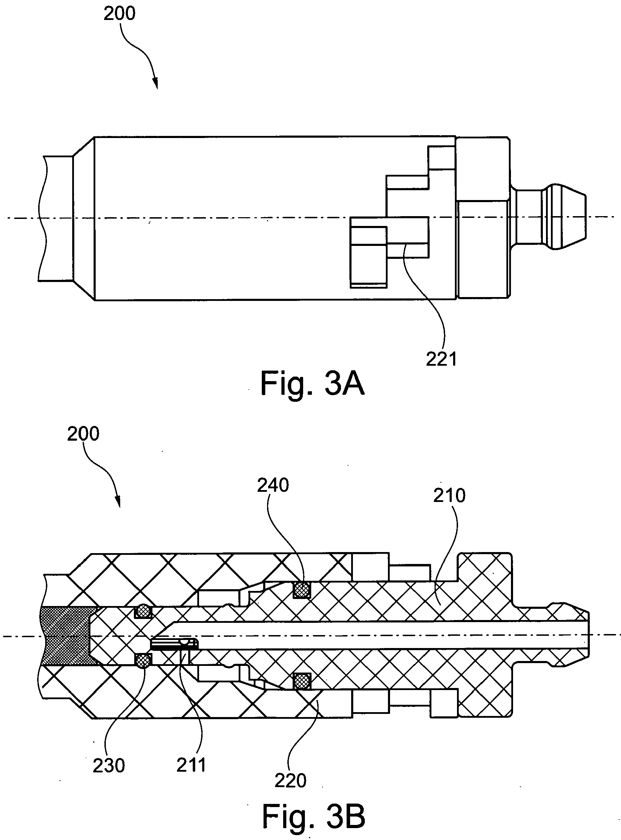

Für eine nähere Beschreibung der Ausführungsbeispiele wird auf die Figuren 3 bis 5 verwiesen.

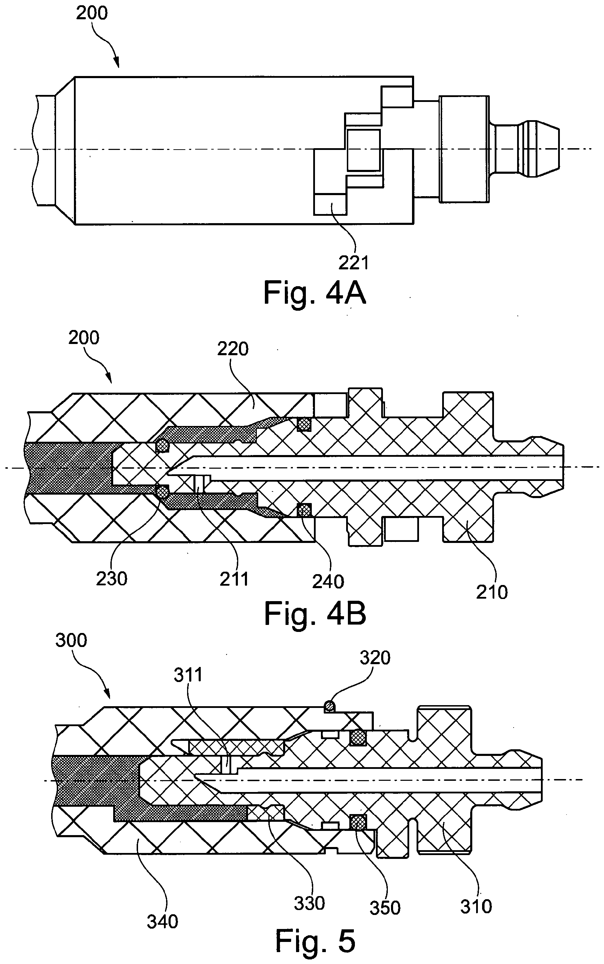

Dabei zeigen Fig. 3A-3B und Fig. 4A-4B einen erfindungsgemäßen Entlüftungsstutzen 200, der sich zum Einsatz bei Hydraulikkupplungs-Ausrücksystemen von Kraftfahrzeugen eignet und dazu ein Entlüftungsventil 210 und ein Stutzengehäuse 220 umfasst. Das Entlüftungsventil 210 ist relativ zum Stutzengehäuse 220 drehbeweglich in diesem angeordnet. Zwischen Entlüftungsventil 210 und Stutzengehäuse 220 ist ein primäres Dichtmittel 230 angebracht. Am Außenumfang des Entlüftungsventils 210 befindet sich eine Bohrung 211, die durch das primäre Dichtmittel 230 verschließbar und durch eine 180° Drehung des Entlüftungsventils wieder geöffnet werden kann, um die Funktion der Entlüftung zu erfüllen. Darüber hinaus verfügt der Stutzen 200 über ein sekundäres Dichtmittel 240, das sich zwischen Entlüftungsventil 210 und Stutzengehäuse 220 befindet und in der Entlüftungsrichtung hinter der Bohrung 211 angeordnet ist.

Im vorliegenden Ausführungsbeispiel umfasst das Entlüftungsventil 210 einen Abschnitt größeren Durchschnitts und einen Abschnitt kleineren Durchschnitts, wobei das primäre Dichtmittel im Abschnitt kleineren Durchschnitts und das sekundäre Dichtmittel im Abschnitt größeren Durchschnitts angebracht ist.

In diesem Ausführungsbeispiel sind jeweils am Außenumfang des Stutzengehäuses 220 eine im Zickzack verlaufende Aussparung 221 und am Außenumfang des Entlüftungsventils 210 ein hier nicht bezeichneter Vorsprung ausgebildet. Dann kann der Vorsprung entlang der Aussparung 221 geführt werden, um das Entlüftungsventil 210 zu drehen. Durch die Drehbewegung des Entlüftungsventils wird das primäre Dichtmittel 230 aus seiner Gebrauchsstellung gebracht und so die Bohrung 211 geöffnet. Auf diese Weise erfüllen das primäre und sekundäre Dichtmittel 230 und 240, bei denen es sich jeweils um einen O-Ring handelt, jeweils die Funktion der Haupt- und Nebendichtung und bilden dabei zwei Liniendichtungen. Damit können die durch Temperaturwechsel bedingten Toleranzänderungen durch eine Verformung der O-Ringe ausgeglichen werden, wodurch die Schieflage des Entlüftungsventils 210 gegenüber dem Stutzengehäuse 220 und auch die Gefahr einer damit verbundenen Leckage verringert werden. Des Weiteren lässt sich die Bohrung 211 manuell öffnen und verschließen, indem das Entlüftungsventil 210 entlang der im Zickzack verlaufenden Aussparung 221 gedreht wird. Wie aus Fig. 3 und 4 hervorgeht, befindet sich der Entlüftungsstutzen nach der Drehbewegung in einer anderen Höhenlage, um damit die Bohrung 211 zu verschließen oder öffnen.

In dem hier gezeigten Ausführungsbeispiel sind das primäre und sekundäre Dichtmittel 230 und 240 in einem Abstand zueinander angeordnet. Je größer dieser Abstand ist, umso weniger ist das Entlüftungsventil geneigt.

Durch die Ausbildung einer Liniendichtung im drehbaren Entlüftungsstutzen 200, die sich als robuster erweist, kann die Abhängigkeit von den durch Temperaturwechsel verursachten Toleranzänderungen reduziert werden. Zudem sind O-Ringe als Normteile langlebiger und kostengünstiger als die bisher eingesetzten Dichtungsschläuche.

In Fig. 5 ist ein Entlüftungsstutzen 300 gemäß einem weiteren nicht erfindungsgemäßen Ausführungsbeispiel dargestellt, der ein Entlüftungsventil 310 und ein Stutzengehäuse 340 umfasst. Dieses Ausführungsbeispiel unterscheidet sich von dem gemäß Fig. 3-4 dadurch, dass als sekundäres Dichtmittel 350 ein O-Ring und als primäres Dichtmittel ein Dichtungsschlauch 330 verwendet wird. Zusätzlich hierzu ist der Dichtungsschlauch abgeschrägt ausgeführt, um die Bohrung 311 durch eine Drehbewegung des Entlüftungsventils 310 öffnen zu können. Im vorliegenden Beispiel dient der Dichtungsschlauch 330 lediglich der Hauptdichtung, während der sekundäre Dichtring 350 ebenfalls durch eine Verformung die durch Temperaturwechsel herbeigeführten Toleranzänderungen kompensieren kann. Auf diese Weise lässt sich die wegen unzureichender Genauigkeit oder der oben genannten Toleranzänderungen entstehende Schieflage des Entlüftungsventils 310 reduzieren, um mögliche Leckagen zu vermeiden.

Im vorliegenden Ausführungsbeispiel ist das Entlüftungsventil 310 zusätzlich durch eine Federklemme 320 im Stutzengehäuse 340 eingeklemmt. Unter Einwirkung der Federklemme 320 befindet sich der Entlüftungsstutzen vor und nach der Drehbewegung in der gleichen Höhenlage.

Auch hierbei sind das primäre und sekundäre Dichtmittel 330 und 350 in einem Abstand zueinander angeordnet. Je größer dieser Abstand ist, umso weniger ist das Entlüftungsventil geneigt.

Es versteht sich von selbst, dass die oben beschriebenen erfindungsgemäßen Ausführungsformen nur der beispielhaften Darstellung der vorliegenden Erfindung dienen. Daraus sind Fachleuchten auf diesem Gebiet weitere Abänderungen und Variationen im Rahmen der Patentansprüche ableitbar, ohne den Grundgedanken der vorliegenden Erfindung zu verlassen.

## Patentansprüche

1. Entlüftungsstutzen (200) zur Flüssigkeitsfüllung und Entlüftung in einem Hydraulikkupplungs-Ausrücksystem eines Kraftfahrzeuges mit einem Entlüftungsventil (210) und einem Stutzengehäuse (220) wobei
- das Entlüftungsventil relativ zum Stutzengehäuse drehbeweglich in diesem angeordnet ist,
- zwischen Entlüftungsventil und Stutzengehäuse ein primäres Dichtmittel (230; 330) angebracht ist, und
- sich am Außenumfang des Entlüftungsventils eine Bohrung (211) befindet, die durch das primäre Dichtmittel (230) verschließbar und durch eine 180° Drehung des Entlüftungsventils wieder geöffnet werden kann, um bedarfsorientiert Luft und Flüssigkeiten auszulassen,
wobei der Stutzen ferner über ein sekundäres Dichtmittel (240) verfügt, das sich zwischen Entlüftungsventil und Stutzengehäuse befindet und in der Entlüftungsrichtung hinter der Bohrung angeordnet ist, um die Schieflage des Entlüftungsventils gegenüber dem Stutzengehäuse zu verringern und wobei
- das Entlüftungsventil einen Abschnitt größeren Durchschnitts und einen Abschnitt kleineren Durchschnitts umfasst, wobei das primäre Dichtmittel im Abschnitt kleineren Durchschnitts und das sekundäre Dichtmittel im Abschnitt größeren Durchschnitts angebracht ist, und wobei es sich bei dem primären Dichtmittel (230) und dem sekundären Dichtmittel (240) jeweils um einen O-Ring handelt,
- **dadurch gekennzeichnet, dass** jeweils am Außenumfang des Stutzengehäuses (220) eine im Zickzack verlaufende Aussparung (221) und am Außenumfang des Entlüftungsventils (210) ein Vorsprung ausgebildet ist, und
- der Vorsprung entlang der Aussparung (221) geführt werden kann, um das Entlüftungsventil (210) zu drehen und damit das primäre Dichtmittel (230) aus seiner Gebrauchsstellung zu bringen.

2. Entlüftungsstutzen gemäß Anspruch 1, wobei das Entlüftungsventil durch eine Federklemme oder anderweitige Klemmen im Stutzengehäuse eingeklemmt ist.

3. Entlüftungsstutzen gemäß einem der vorangehenden Ansprüche, bei dem das primäre Dichtmittel und das sekundäre Dichtmittel in einem Abstand zueinander angeordnet sind, wobei das Entlüftungsventil umso weniger geneigt ist, je größer dieser Abstand ist.

## Claims

1. Ventilation connector (200) for liquid filling and ventilation in a hydraulic clutch disengagement system of a motor vehicle, having a ventilation valve (210) and having a connector housing (220), wherein
- the ventilation valve is arranged in the connector housing so as to be rotationally movable relative thereto,
- a primary sealing means (230; 330) is fitted between ventilation valve and connector housing, and,
- on the outer circumference of the ventilation valve, there is situated a bore (211) which can be closed off by way of the primary sealing means (230) and which can be opened again by way of a 180° rotation of the ventilation valve in order to discharge air and liquids in accordance with demand,
wherein the connector furthermore has a secondary sealing means (240) which is situated between ventilation valve and connector housing and which is, as viewed in the ventilation direction, arranged downstream of the bore in order to reduce the oblique positioning of the ventilation valve relative to the connector housing, and wherein
- the ventilation valve comprises a section of relatively large diameter and a section of relatively small diameter, wherein the primary sealing means is fitted in the section of relatively small diameter and the secondary sealing means is fitted in the section of relatively large diameter, and wherein the primary sealing means (230) and the secondary sealing means (240) is in each case an O-ring,
- **characterized in that**
in each case on the outer circumference of the connector housing (220), there is formed a recess (221) which runs in zigzag fashion, and on the outer circumference of the ventilation valve (210), there is formed a projection, and
- the projection can be guided along the recess (221) in order to rotate the ventilation valve (210) and thus move the primary sealing means (230) out of its usage position.

2. Ventilation connector according to Claim 1, wherein the ventilation valve is clamped in the connector housing by way of a spring clamp or some other clamping means.

3. Ventilation connector according to one of the preceding claims, in which the primary sealing means and the secondary sealing means are arranged with a spacing to one another, wherein the inclination of the ventilation valve is less the greater said spacing is.

## Revendications

1. Tubulure de désaérage (200) pour le remplissage de liquides et le désaérage dans un système de débrayage d'un embrayage hydraulique d'un véhicule automobile, comprenant une soupape de désaérage (210) et un boîtier de tubulure (220),
- la soupape de désaérage étant disposée par rapport au boîtier de tubulure de manière déplaçable en rotation dans celui-ci,
- un moyen d'étanchéité primaire (230 ; 330) étant monté entre la soupape de désaérage et le boîtier de tubulure, et
- un alésage (211) se trouvant au niveau de la périphérie extérieure de la soupape de désaérage, lequel peut être fermé par le moyen d'étanchéité primaire (230) et peut à nouveau être ouvert par une rotation de 180° de la soupape de désaérage, afin de permettre un échappement d'air et de liquides en fonction des besoins,
la tubulure disposant en outre d'un moyen d'étanchéité secondaire (240) qui se trouve entre la soupape de désaérage et le boîtier de tubulure et qui est disposé dans la direction de désaérage derrière l'alésage, afin de réduire l'oblicité de la soupape de désaérage par rapport au boîtier de tubulure et
- la soupape de désaérage comprenant une portion de plus grande section et une portion de plus petite section, le moyen d'étanchéité primaire étant monté dans la portion de plus petite section et le moyen d'étanchéité secondaire étant monté dans la portion de plus grande section, et le moyen d'étanchéité primaire (230) et le moyen d'étanchéité secondaire (240) étant dans chaque cas un joint torique,
- **caractérisée en ce que**
- un évidement (221) s'étendant en zigzag est réalisé à chaque fois au niveau de la périphérie extérieure du boîtier de tubulure (220) et une saillie est réalisée au niveau de la périphérie extérieure de la soupape de désaérage (210), et
- la saillie peut être guidée le long de l'évidement (221) afin de faire tourner la soupape de désaérage (210) et d'amener ainsi le moyen d'étanchéité primaire (230) hors de sa position d'utilisation.

2. Tubulure de désaérage selon la revendication 1, dans laquelle la soupape de désaérage est serrée par une pince élastique ou des pinces d'un autre type dans le boîtier de tubulure.

3. Tubulure de désaérage selon l'une quelconque des revendications précédentes, dans laquelle le moyen d'étanchéité primaire et le moyen d'étanchéité secondaire sont disposés à distance l'un de l'autre, la soupape de désaérage étant d'autant moins inclinée que cette distance est grande.
